# EUROPÄISCHE PATENTSCHRIFT

(11) **EP 0 624 792 B1**
(45) Veröffentlichungstag und Bekanntmachung des Hinweises auf die Patenterteilung: **04.08.1999**
(21) Anmeldenummer: 94107221.7
(22) Anmeldetag: 09.05.1994
(51) Int. Cl.: G01N 27/414

(54) **Redundanz-ISFET**
Reserve ISFET
ISFET de réserve

(30) Priorität: 13.05.1993 DE 4316003
(43) Veröffentlichungstag der Anmeldung: 17.11.1994
(73) Patentinhaber: Forschungszentrum Rossendorf e.V., D-01474 Rossendorf (DE)
(72) Erfinder: Howitz, Steffen, Dr., D-01309 Dresden (DE); Pham, Minh Tan, Dr., D-01324 Dresden (DE)

(56) Entgegenhaltungen:
- EP-A- 0 065 350
- EP-A- 0 075 410
- MEMBRANES FOR CHEMICAL SENSORS, Bd. 4, 1991 Seiten 53-63, PAUL CLECHET 'membranes for chemical sensors'

## Beschreibung

Die vorliegende Erfindung betrifft einen Redundanz-ISFET vorzugsweise für den Einsatz in FLUIDIK-ISFET-Meßsystemen. Insbesondere betrifft die vorliegende Erfindung Mittel zur Passivierung und Aktivierung der ISFET-Funktion, welche es ermöglichen, aus einem Array einzelne ISFETs seriell nach Bedarf in den Meßzyklus einzuschalten und dadurch dem Meßsystem eine problemangepaßte Lebensdauer zu verleihen.

Insbesondere durch den Einsatz in komplexen, eine Vielzahl von ISFETs aufweisenden chemischen Meßsystemen ist das die Lebensdauer des Gesamtsystems bestimmende Problem der Lebensdauer der Einzelkomponenten bedeutsam geworden. Diese wiederum wird im wesentlichen durch die Membrandegradation im meßmedialen Kontakt, besonders beim kontinuierlichen und langzeitigen Einsatz der ISFETs bestimmt.
In bisherigen Lösungsansätzen wurde versucht, Werkstoffsysteme für chemisch empfindliche Membranen zu entwickeln, mit denen das Alterungsverhalten im Sinne einer Lebensdauerverbesserung begünstigt wurde. Erreicht wurden damit jedoch nur Lebensdauerverbesserungen um Tage und Wochen (Sensors and Actuators B, 4 (1991) 53-63) was in etwa eine Verdoppelung der schichtabhängigen durchschnittlichen Lebensdauer der ISFETs entspricht.

Aufgabe der Erfindung ist es, die Lebensdauer von ISFET-Meßsystemen zu erhöhen. Erfindungsgemäß geschieht dies durch Einführung der in den Patenansprüchen beschriebenen RedundanzISFETs, die zunächst inaktiv sind und in dieser Wartezeit nicht altern können, weil deren chemisch empfindliche Membran vom Meßmedium nicht benetzt wird. Erst durch gezielte Aktivierung der Redundanz-ISFETs durch serielle Entfernung der Opferschicht, wird der Redundanz-ISFET in den Meßzyklus übernommen.

Mit der Erfindung ist es möglich, eine zeitlich reproduzierbare und auf eindeutig nur eine Opferschicht adressierbare Schaltfunktion zur Entfernung der Opferschicht zu geben. Als Resultat der Opferschichtentfernung am avisierten Redundanz-ISFET gelangt dessen chemisch aktive Membranoberfläche, die hinsichtlich ihrer chemischen Sensitivität und Selektivität zur Ausübung der Meßfunktion innerhalb des Sensorarrays ausgelegt ist, in meßmedialen Kontakt. Die o.g. Schaltfunktion zur Opferschichtentfernung kann als Softwareelement in die Systemsoftware des elektrochemischen Meßsystems derart eingebunden werden, daß sie in Abhängigkeit vom Alterungsverhalten der bisher aktiven ISFETs ausgelöst wird. Damit ist eine im wesentlichen von der Anzahl der im Meßsystem angeordneten Redundanz-ISFETs abhängige deutliche Lebensdauerverlängerung kompletter Meßsysteme möglich.

Die Erfindung wird nachfolgend an Ausführungsbeispielen näher erläutert.

Die zugehörige Zeichnung zeigt einen Querschnitt durch einen passiven Redundanz-ISFET, der in ein Fluidik-ISFET-Meßsystem eingebunden ist.

Der Redundanz-ISFET basiert auf einem an sich bekannten Rückseitenmembran-ISFET, bestehend aus der Drain-Source-Metallisierung (1), den Drain-Source-Gebieten (2), dem vergrabenen SIMOX-Gate Isolator (3), dem freigelegten RSM-Gebiet (Rückseitenmembran) im Kontakt zum Meßmedium (4), der ISFET-Membran (5), der Opferschicht (6) und dem Träger-Si (7). Die Opferschicht (6) besteht beispielsweise aus einer elektrochemisch auflösbaren und zwischen 500 nm und 800 nm dicken Metallisierungsschicht, die neben der Funktion der Membranpassivierung auch montagetechnologische Bedeutung hat. Sie übernimmt neben der Aufgabe der Membranabdeckung als Opferschicht im Bereich (9) außerhalb dieser Membran die Funktion der Übergangs- bzw. Koppelschicht zwischen Sensorelement und Durchflußzelle. Für die Aufgabe der Opferschicht wird in diesem Beispiel eine geschlossene Doppelschicht aus Cr (300 nm) und Au (200 nm) eingesetzt, die elektrisch leitend ist und von der Steuerelektronik des Meßsystems über den Kontakt (8) ein spezifisches Auflösungspotential gegen das in der Durchflußzelle strömende elektrolytische Fluid erhält. In chloridhaltigen oder sulphathaltigen Elektrolytlösungen im pH-Breich von 2...10 wird zur Entfernung der Opferschicht und zur Reaktivierung der ISFET-Funktion folgendes Arbeitsregime verwendet: Potential der Opferschicht 4 V gegen Meßmedium, Stromdichte 4...5 A/dm², Dauer der Aktivierung 4..6 min. Das strömende Fluid hat einerseits die elektrische Funktion, ein Auflösungspotential für genau eine Opferschicht bereitzustellen, andererseits transportiert es das in Lösung gehende Opferschichtmetall aus der Zelle. Für die Aufgabe als Übergangs- oder Koppelschicht muß die Opferschicht entweder lötfähig (Gold oder Chrom) oder klebefähig (Chrom, Gold, Nickel) sein. Der nach der Redundanz-ISFET-Aktivierung stehenbleibende Rest der Opferschicht hat nur noch die mechanische Funktion einer hermetisch dichten Verbindungszone.

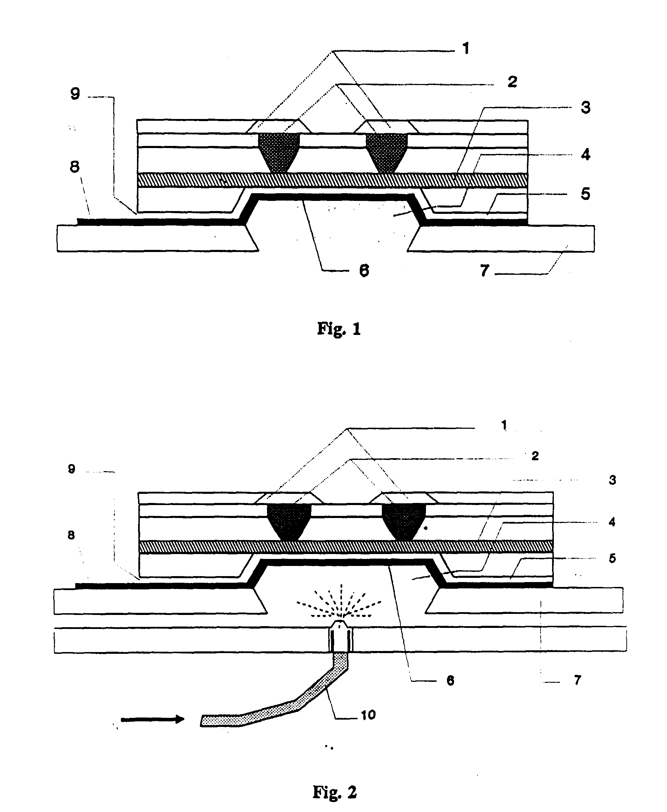

In einem weiteren, in Fig. 2 dargestellten Ausführungsbeispiel wird als Membranabdeckungsschicht das fotosensitive Polymermaterial Micro posit 1300-27 (Shipley) eingesetzt. Durch Auftragen und Schleudern wird das Material in einer Schichtdicke von ca. 1...3 µm auf das zu schützende Gate-Gebiet des ISFETs aufgebracht und bei 80°C für 2 Stunden getempert. Aus Testmessungen geht hervor, daß eine derartige Opferschicht für Meßmedien im pH-Bereich von 4 ... 8 eine wirksame Barriere gegen Alterungsprozesse der ISFET-Membran darstellt. Zum Initiieren der gezielten Entfernung der Opferschicht wird das betreffende Gebiet über den Lichtleiter(10) mit Licht im Spektralbereich von 460 ...480 nm bei einer Energiedichte von 15 mW/cm² für 30 s lokal belichtet. Der Lösungsprozeß erfolgt anschließend mit einer Glyzerin-Wassergemisch in 4%iger Trinatriumphosphatlösung welche kurzzeitig anstelle des Meßfluids eingesetzt wird.

## Patentansprüche

1. Redundanz-ISFET, vorzugsweise für den Einsatz in Fluidik-ISFET-Meßsystemen, dadurch gekennzeichnet, daß die den Gate-Isolator (3) bedeckende, chemisch empfindliche Membran (5) durch eine zusätzliche, gegenüber dem Meßmedium (4) resistente, selektiv entfernbare, den Kontakt der Membran (5) mit dem Meßmedium (4) verhindernde Opferschicht (6) überzogen ist, und daß der ISFET Mittel (8, 10) aufweist, die eine von außen gesteuerte Entfernung der Opferschicht (6) ermöglichen.

2. Redundanz-ISFET nach Anspruch 1, dadurch gekennzeichnet, daß die Opferschicht (6) ein Metall, ein Polymer oder eine Kombination aus Metall und Polymer ist.

3. Redundanz-ISFET nach Anspruch 1, dadurch gekennzeichnet, daß die Mitte (8, 10) zur Entfernung der Opferschicht elektrochemischer oder optochemischer Natur sind.

4. Redundanz-ISFET nach Anspruch 1, dadurch gekennzeichnet, daß die die Membran (5) bedeckende Opferschicht (6) flächenmäßig über den chemisch empfindlichen Bereich hinausreicht und dort als Übergangs- bzw. Koppelschicht zwischen Sensorelement und Durchflußzelle eingesetzt ist.

## Claims

1. Redundancy ISFET, preferably for use in fluidics ISFET measuring systems, characterised in that the chemically-sensitive gate isolator is coated with an additional, selectively removable, sacrificial layer, resistant to the medium being measured and which prevents contact of the membrane with the medium being measured and that the ISFET has means to enable an externally-controllable removal of the sacrificial layer.

2. Redundancy ISFET in accordance with Claim 1, characterised in that the sacrificial layer is a metal, a polymer or a combination of metal and polymer.

3. Redundancy ISFET in accordance with Claim 1, characterised in that the means for removing the sacrificial layer is electrochemical or optochemical in nature.

4. Redundancy ISFET in accordance with Claim 1, characterised in that the sacrificial layer coating the gate isolator extends in area over the chemically-sensitive region and is used there as a transition or connecting layer between sensor element and continuous flow cell.

## Revendications

1. ISFET redondant, de préférence pour l'utilisation dans des systèmes de mesures à ISFET pour la fluidique, caractérisé par le fait que l'isolant de grille de sensibilité chimique est recouvert d'une couche sacrificielle supplémentaire, résistante au médium à mesurer, à retrait sélectif, et empêchant le contact de la membrane avec le médium à mesurer, et que l'ISFET présente des moyens permettant le retrait depuis l'extérieur de la couche sacrificielle.

2. ISFET redondant selon la revendication 1, caractérisé par le fait que la couche sacrificielle est un métal, un polymère ou une combinaison de métal et de polymère.

3. ISFET redondant selon la revendication 1, caractérisé par le fait que les moyens de retrait de la couche sacrificielle sont de nature électrochimique ou optochimique.

4. ISFET redondant selon la revendication 1, caractérisé par le fait que la couche sacrificielle recouvrant l'isolant de grille dépasse en surface la zone à sensibilité chimique et qu'elle est alors utilisée comme couche de transition et/ou de couplage entre l'élément détecteur et la cellule de débit.
